# EUROPEAN PATENT APPLICATION

(11) **EP 1 798 518 A1**
(43) Date of publication of application: **20.06.2007**
(21) Application number: 06256340.8
(22) Date of filing: 13.12.2006
(51) Int. Cl.: G01C 9/28

(54) **Universal extension set for spirit levels**

(30) Priority: 14.12.2005 US 750069 P
(71) Applicant: Kapro Industries ltd., 12390 D. N. Bikat Beit Hakerem (IL)
(72) Inventor: Schwartz, Mordechai, Shimshit 17906 (IL)
(74) Representative: South, Nicholas Geoffrey

(57) **Abstract**

Universal extension set for a spirit level (1) having an elongated leveling face (2) for setting on a surface and defining a nominal working length, a face (3) opposite to the leveling face, a pair of opposite major side surfaces (4,6), and a pair of opposite end sections. The universal extension set includes a pair of discrete elongated U-shaped profile spirit level extenders (9) for lengthwise accommodating an end section of a spirit level (1) with its leveling face (2) facing towards a surface, and a pair of spirit level clamps (11) for clamping the spirit level therein. The pair of spirit level extenders (9) partially underlie a spirit level's leveling face and their remaining portions extend lengthwise therebeyond on their spaced apart alignment on a surface such that the universal extension set extends the spirit level's nominal working length. The spirit level clamps (11) each include a lateral securing arrangement (13) for positively bearing against at least one of the spirit level's pair of opposite major side surfaces (4,6) for precluding lateral movement of the spirit level in the spirit level extender. The spirit level extenders (9) can be integrally formed with the spirit level clamps (11) or the spirit level clamps can be removable for storage purposes.

## Description

### Field of the Invention

The invention is in the field of the spirit levels.

### Background of the Invention

Spirit level manufacturers typically offer different categories of spirit levels including *inter alia* high end contractor grade, low end DIY grade, and the like. There are no international standards defining the different categories of spirit levels but high end contractor grade spirit levels typically have thicker profiles with larger external dimensions than their low end DIY grade spirit level counterparts thereby affording greater strength and accuracy. For example, Applicant's 981 contractor grade spirit levels employ a 25mm wide 60mm high box section profile whilst Applicant's Light 781 DIY grade level spirit levels employ a 20mm wide 50mm high box section profile. The former has an about 30%thicker profile than the latter.

Commonly assigned PCT International Application No. PCY/IL2003/000685 published under PCT International Publication No. W02005/017452 illustrates and describes an extension set for selectively extending the nominal working length of a spirit level. The extension set includes attachment means for selectively and conveniently securing a pair of discrete elongated spirit level extenders at opposite ends of a spirit level. The spirit level extenders are preferably extruded U-shaped channel aluminum profiles for slidingly receiving either an inverted U-shaped spirit level clamp or an elastic strap provided with tensioning means.

Alternative extension means for selectively extending nominal working lengths of spirit levels are illustrated and described in *inter alia* US Patent No. 4,130,943 to Talbot, US Patent No. 4,894,925 to Langmaid, US Patent No. 4,928,395 to Good, US Patent No. 5,249,365 to Santiago, US Patent No. 5,433,011 to Scarborough et al, US Patent No. 5,442,864 to Erman, US Patent No. 5,617,641 to Aarhus, US Patent No. 6,041,510 to Huff, US Patent No. 6,279,240 to Bonaventura, Jr., and US Patent Application Publication No. US2002/20116833 to Hollenbeck.

### Summary of the Invention

The present invention is for a universal extension set similar to the afore-mentioned PCT International Publication No. WO2005/017452 insofar that it includes a pair of spirit level extenders, and a pair of spirit level clamps each with a vertical securing arrangement for downwardly tightening a spirit level in a spirit level extender for use in difficult working environments, for example, a carpenter's workshop, a building site, and the like, and without leaving any residual marks. The universal extension set of the present invention differs from the afore-mentioned PCT International Publication No. W02005/017452 insofar that each spirit level clamp has a lateral securing arrangement for precluding lateral movement of a spirit level in a spirit level extender for facilitating use. Lateral securing arrangements are preferably designed to be suitable for use with spirit levels over, say, a 5mm width range. Accordingly, it is envisaged that universal extension sets in accordance with the present invention will be available with spirit level extenders of different lengths, and spirit level clamps for use with different ranges of widths and heights of box section spirit levels and I-beam spirit levels for extending their nominal working lengths.

### Brief Description of the Drawings

In order to understand the invention and to see how it can be carried out in practice, preferred embodiments will now be described, by way of non-limiting examples only, with reference to the accompanying drawings in which similar parts are likewise numbered, and in which:
Fig. 1 is a perspective view showing the use of a universal extension set for extending the nominal working length of an I beam spirit level;
Fig. 2 is a perspective view of a spirit level extender with a first embodiment of a spirit level clamp in a non-securing state;
Fig. 3 is a perspective view of a vertical securing member of the spirit level clamp of Figure 2;
Fig. 4 is a longitudinal cross section of the spirit level clamp along line A-A in Figure 2;
Fig. 5 is a perspective view of Figure 2's spirit level extender with its spirit level clamp in a securing state;
Fig. 6 is a longitudinal cross section of the spirit level clamp along line B-B in Figure 5;
Fig. 7 is an end view of the spirit level extender with its spirit level clamp adjacent an I-beam spirit level;
Fig. 8 is a perspective view of a spirit level extender with a second embodiment of a spirit level clamp;
Fig. 9 is a perspective view of a spirit level extender with a third embodiment of a spirit level clamp; and
Fig. 10 is a perspective view of a spirit level extender with a fourth embodiment of a spirit level clamp.

### Description of Preferred Embodiments of the Present Invention

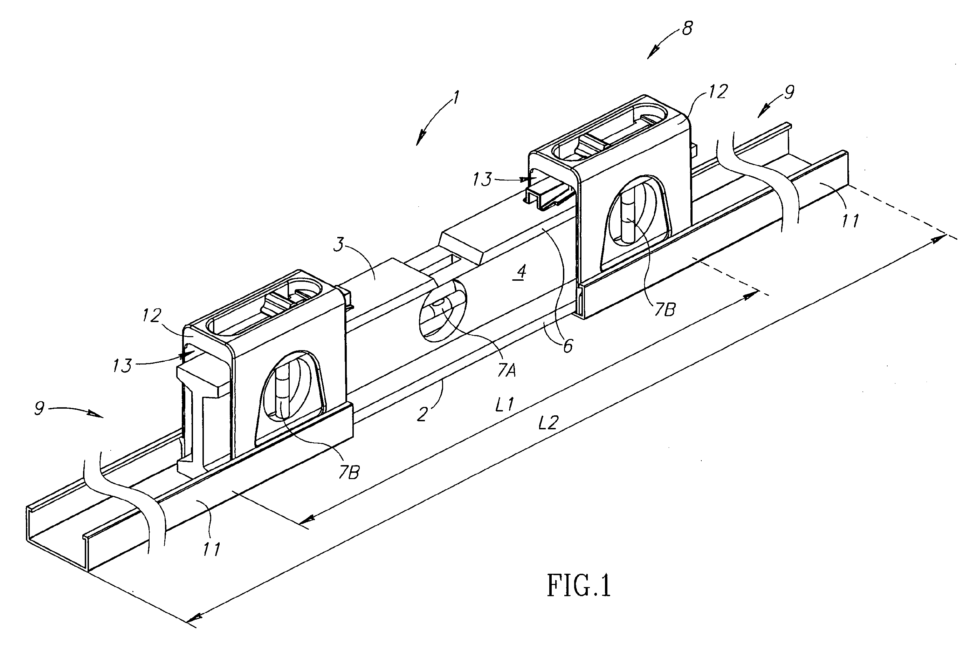

Figure 1 shows an I-beam spirit level 1 having an elongated leveling face 2 for setting on a surface, a face 3 opposite the leveling face 2, and a pair of major opposite surfaces 4 including extreme side surfaces 6. The spirit level 1 has a nominal standard working length L1 of, say, 24" in the case of an imperial sized spirit level or, say, 30cm in the case of a metric sized spirit level, width W 1 and height H1. The spirit level 1 has three bubble vials 7 deployed along its length including a central bubble vial 7A with its longitudinal axis co-directional therewith, and lateral bubble vials 7B with their longitudinal axes perpendicular to the spirit level's longitudinal axis. One of the lateral bubble vials 7B is formed with the so-called Plumbsite® front vial viewer feature illustrated and described in commonly assigned US Patent No. 6,748,666 to Zugel et al. The leveling face 2 may be flat or formed with a longitudinal groove for placing on a pipe, a post, and the like.

The spirit level 1 is extendible to a working length L2>L1 by a universal extension set 8 including a pair of discrete elongated spirit level extenders 9 each having an U-shaped channel aluminum profile 11 with an inverted U-shaped spirit level clamp 12. The spirit level clamps 12 extend widthwise across their respective spirit level extenders 9 for defining spaces 13 for lengthwise sliding insertion of opposite ends of the spirit level 1 such that sections thereof underlie the spirit level 1 and their remaining sections protrude lengthwise on the spaced apart alignment on the spirit level extenders 9 on a surface. The spirit level clamps 12 are preferably formed from rigid plastic material such as glass fiber reinforced polyamide, nylon, ABS, and the like.

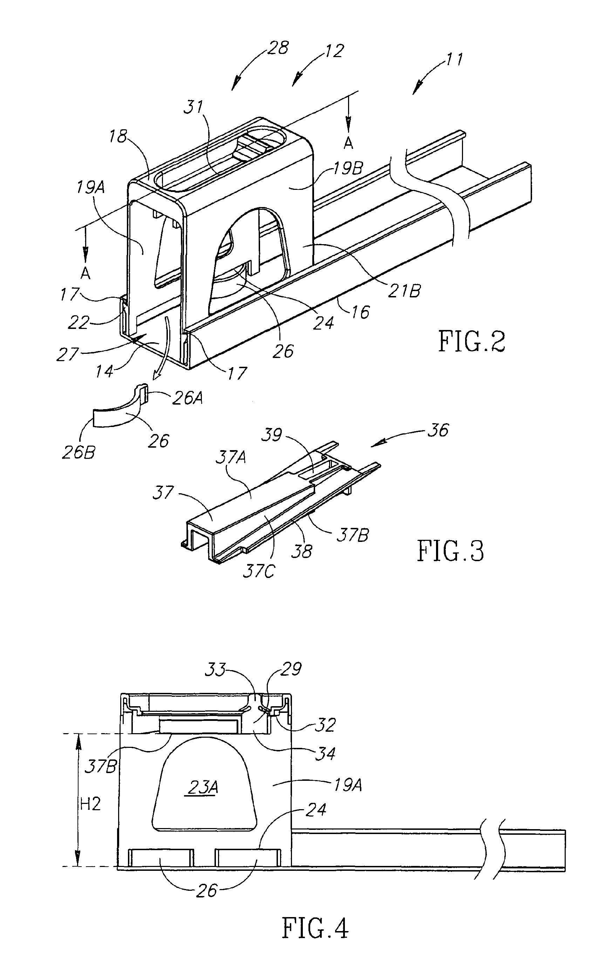

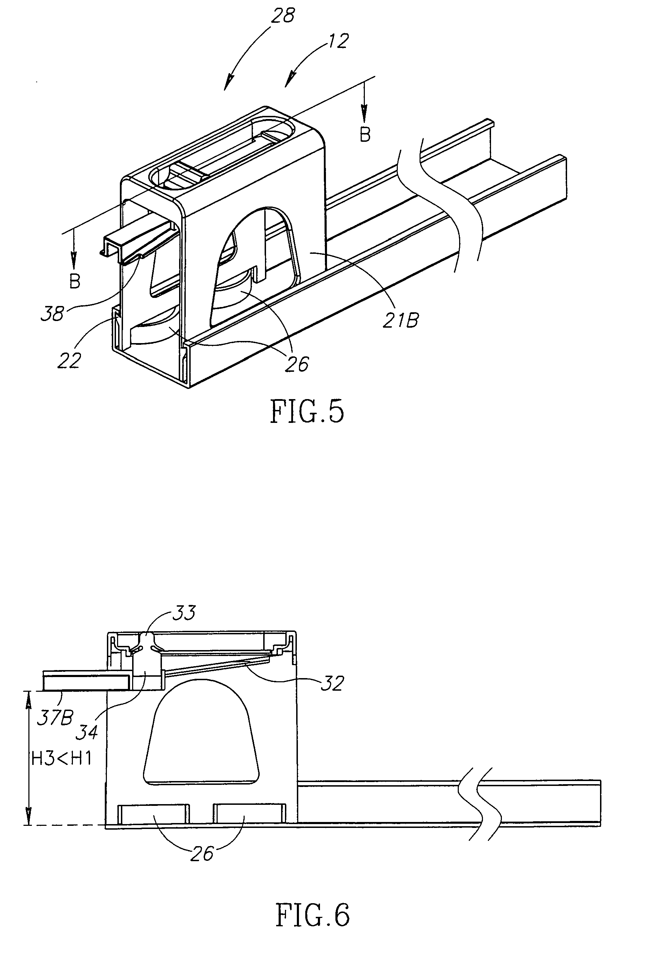

Figures 2-7 show an extruded U-shaped channel aluminum profile 11 has a top surface 14 on which a spirit level's leveling surface 2 is intended to be placed upon, and a bottom surface 16 to be placed on a surface whose inclination is to be determined. Top surface 14 and bottom surface 16 are suitably machined to about 0.001" flatness so as not to degrade a spirit level's leveling accuracy. Spirit level extenders 9 can be provided in different lengths in the order of say, 12"±4" or the metric equivalent. Aluminum profiles 11 have a pair of opposite inwardly directed longitudinally directed female dovetail flanges 17 for engaging a spirit level clamp 12 for mounting same inside a spirit level extender 9.

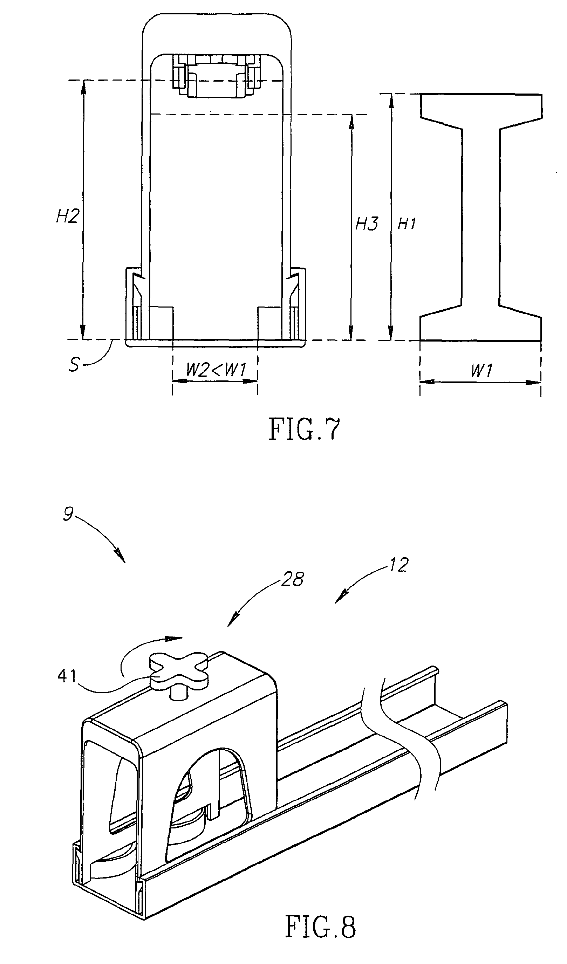

Each spirit level clamp 12 includes a top surface 18 connecting a pair of opposite major side walls 19A and 19B whose exterior surfaces 21A and 21B are each formed with a male dovetail ridge 22 for slidingly insertion into a female dovetail flange 17. The major side walls 19A and 19B are formed with trapezoidal shaped apertures 23A and 23B to avoid the spirit level clamps 12 blocking the bubble vials 7B from view on mounting the spirit level clamps 12 on a spirit level 1. The major side walls 19A and 19B are each formed with a pair of adjacent lengthwise directed cutouts 24 for receiving elongated curved lateral securing members 26. The lateral securing members 26 are typically formed from suitable pliable plastic material, such as, acetal POM, and the like. The lateral securing members 26 have an end 26A for fixedly retaining in the spirit level clamp 12 and a free end 26B. The ends 26A of adjacent lateral securing members 26 along the same major side wall 19A or 19B are adjacent to one another and free ends 26B are remote from one another. Opposite lateral securing members 26 bulge toward one another on being fitted into cutouts 24 to define a separation W2<W1 (see Figure 7). The separation W2 is smaller than a spirit level's width W1 such that a moderate force is required to slidingly insert a spirit level 1 into a spirit level extender 9 by outwardly urging the lateral securing members 26 towards the major side walls 19A and 19B thereby further distancing the free ends 26B. However, the separation W2 is not much smaller than a spirit level's width W1 since this would prevent the lengthwise sliding insertion of a spirit level 1 into a spirit level clamp 12. Thus, each spirit level clamp 12 includes a lateral securing arrangement 27 which takes advantage of the inherent elasticity of the lateral securing members 26 for centering a spirit level 1 therein on its lengthwise sliding insertion into a spirit level extender 9.

Each spirit level clamp 12 is also provided with a vertical securing arrangement 28 for bearing down on a spirit level's face 3 opposite its leveling face 2 for securing a spirit level 1 in a spirit level extender 9. Vertical securing arrangements 28 can be selectively manipulated between a non-securing state and a securing state or alternatively can be designed to bear down on a spirit level's face 3 on sliding insertion into a spirit level extender 9.

Figures 2-7 show a vertical securing arrangement 28 with a drive member 29 manually reciprocal along a slot 31 in the top surface 18 having a downward depending pair of parallel and opposite lengthwise directed inclined rails 32. The drive member 29 includes a handle member 33 disposed widthwise above the slot 31 for gripping by a user and a downward depending lengthwise directed key 34. The drive member 29 drives a vertical securing member 36 having a body 37 with a top surface 37A, a bottom surface 37B for bearing against a spirit level's face 3, a pair of parallel and opposite major side surfaces 37C with outwardly directed flanges 38 for sliding along the pair of parallel and opposite lengthwise directed inclined rails 32, and a throughgoing slot 39 (see Figure 3). The key 34 is slidingly received in the slot 39 for sliding the driven vertical securing member 36 between a non-securing state in which the bottom surface 37B defines a height H2 with a surface S where H2>H1 (see Figures 4 and 7) and a securing state in which the bottom surface 37B defines a height H3 with a surface S where H3<H1 (see Figures 6 and 7). The key 34 is fully inserted in the slot 39 in the non-securing position and only partially inserted in the securing position.

Figure 8 shows a spirit level extender 9 with a spirit level clamp 12 with a vertical securing arrangement 28 including a vertical securing member 41 for screw threading down onto a spirit level's face 3 on its lengthwise sliding insertion into the spirit level extender 9 for securing the spirit level 1 therein.

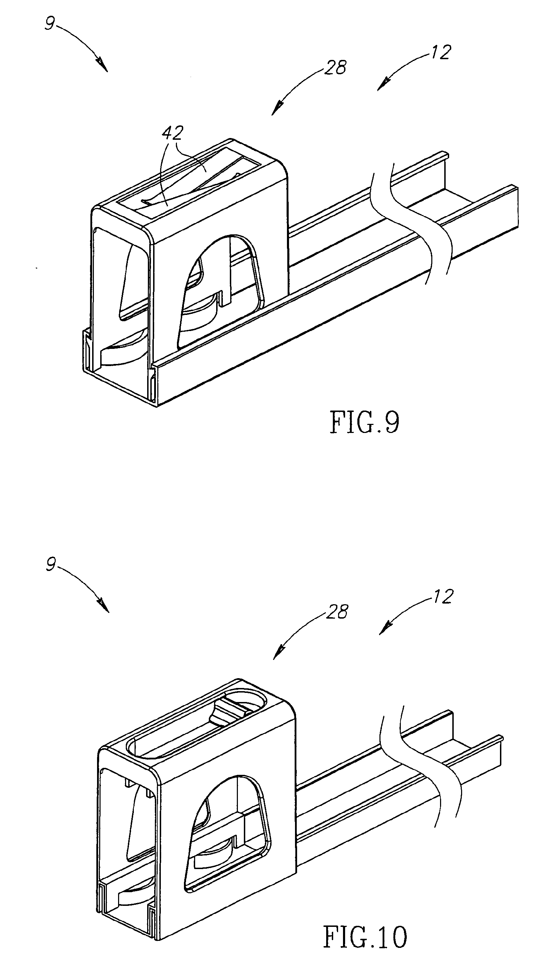

Figure 9 shows a spirit level extender 9 with a spirit level clamp 12 with a vertical securing arrangement 28 similar to the vertical securing arrangement shown in afore mentioned PCT International Publication No. W02005/017452. The vertical securing arrangement includes a pair of oppositely directed resiliently hinged clamping members 42 for applying pressure on a spirit level's face 3 on its lengthwise sliding insertion into the spirit level extender 9 for securing the spirit level 1 therein.

Figure 10 shows a spirit level clamp 12 mounted on the outside of an aluminum profile 11 in a similar manner as shown in afore mentioned PCT International Publication No. W02005/017452.

While the invention has been described with respect to a limited number of embodiments, it will be appreciated that many variations, modifications, and other applications of the invention can be made within the scope of the appended claims. For example, spirit level clamps can be removably mounted on spirit level extenders for storage purposes.

## Claims

1. A universal extension set for a spirit level having an elongated leveling face for setting on a surface and a face opposite the leveling face, a pair of opposite major side surfaces, and a pair of opposite end sections, the leveling face defining a nominal working length of the spirit level, the universal extension set comprising:
(a) a pair of discrete elongated spirit level extenders for placing on the surface, each spirit level extender having a U-shaped channel for lengthwise accommodating an end section of the spirit level with its leveling face facing towards the surface; and
(b) a pair of inverted U-shaped spirit level clamps for correspondingly mounting widthwise across said pair of spirit level extenders for defining spaces for slidingly receiving opposite end sections of the spirit level with its leveling face facing towards the surface,
each spirit level clamp including a vertical securing arrangement for downwardly bearing on a spirit level's face opposite its leveling face for securing the spirit level in its associated spirit level extender whereupon said pair of spirit level extenders extend lengthwise beyond the spirit level's end sections on their spaced apart alignment on the surface thereby extending the spirit level's nominal working length,
**characterized in that**
each spirit level clamp includes a lateral securing arrangement for positively bearing against at least one of the spirit level's pair of opposite major side surfaces for precluding lateral movement of a spirit level in a spirit level extender.

2. The universal extension set according to claim 1 wherein a lateral securing arrangement includes at least one resiliently elastically deformable member disposed lengthwise for bearing against a spirit level's major side surface on lengthwise sliding insertion of a spirit level into a spirit level clamp mounted on a spirit level extender.

3. The universal extension set according to claim 2 wherein a lateral securing arrangement includes at least one pair of opposite resiliently elastically deformable members disposed lengthwise for bearing against a spirit level's opposite major side surfaces for centering a spirit level in a spirit level extender on lengthwise sliding insertion of a spirit level into a spirit level clamp mounted on a spirit level extender.

4. The universal extension set according to any one of claims 1 to 3 wherein said vertical securing arrangement includes a vertical securing member for manual reciprocation along a pair of parallel and opposite inclined rails between a non-securing state enabling free lengthwise sliding insertion of a spirit level into a spirit level clamp mounted on a spirit level extender and a securing state for bearing down on a spirit level's face opposite its leveling face for securing a spirit level in a spirit level extender.

5. The universal extension set according to any one of claims 1 to 3 wherein said vertical securing arrangement includes a vertical securing member for screw threading down onto a spirit level's face opposite its leveling face on its lengthwise sliding insertion into a spirit level clamp mounted on a spirit level extender for securing a spirit level in a spirit level extender.

6. The universal extension set according to any one of claims 1 to 3 wherein said vertical securing arrangement includes at least one resiliently hinged clamping member for applying pressure on a spirit level's face opposite its leveling face on its lengthwise sliding insertion into a spirit level clamp mounted on a spirit level extender for securing a spirit level in a spirit level extender.

7. The universal extension set according to any one of claims 1 to 6 wherein a spirit level clamp is mounted on the inside of a spirit level extender.
